# EUROPÄISCHE PATENTSCHRIFT

(11) **EP 2 994 346 B1**
(45) Veröffentlichungstag und Bekanntmachung des Hinweises auf die Patenterteilung: **18.09.2019**
(21) Anmeldenummer: 14703844.2
(22) Anmeldetag: 11.02.2014
(51) Int. Cl.: B60P 7/08, B60J 7/08

(54) **TRANSPORTWAGEN FÜR STÜCKGUT**
TRANSPORT CARRIAGE FOR CARGO
CHARIOT DE TRANSPORT D'ARTICLE

(30) Priorität: 10.05.2013 DE 102013208659
(43) Veröffentlichungstag der Anmeldung: 16.03.2016
(73) Patentinhaber: Hornung, Hubert, 73485 Unterschneidheim-Zöbingen (DE)
(72) Erfinder: Hornung, Hubert, 73485 Unterschneidheim-Zöbingen (DE)
(74) Vertreter: Markfort, Iris-Anne Lucie
(86) Internationale Anmeldenummer: PCT/EP2014/052605
(87) Internationale Veröffentlichungsnummer: WO 2014/180578

(56) Entgegenhaltungen:
- CA-A1- 2 450 341
- US-A1- 2008 231 069
- US-B1- 6 779 828
- US-B1- 7 189 042

## Beschreibung

Die Erfindung betrifft einen Transportwagen für Stückgut mit den Merkmalen des Oberbegriffs des Anspruchs 1, wobei derartige Transportwagen außer für Stückgut aus landwirtschaftlichem Erntegut, insbesondere in Form von gepressten Rund- oder Quaderballen, auch für gepressten Papierabfall, für Kunststoffballen oder anderweitige gepresste Werkstoffe, für bestückte Paletten, Kisten und dergleichen sowie für Stammholz und andere vergleichbare Stückgüter einsetzbar sind.

Der Begriff Transportwagen umfasst dabei alle Arten von Fahrzeugen, unter anderem auch Lastkraftwägen und dergleichen, sowie Anhänger und Anhängersysteme für derartige Fahrzeuge.

Bei bekannten Transportwagen wird üblicherweise das Stückgut auf die Ladeplattform aufgeladen und im Nachgang mit Gurten gesichert. Dabei ist es in der Praxis üblich, in gleichmäßigen Abständen Gurte vorzusehen, die um die Ladeplattform und das Stückgut herum geschlungen werden und das Stückgut gegen die Ladeplattform spannen. In der Praxis nachteilig ist jedoch dabei, dass die einzelnen Gurte separat angebracht und gespannt werden müssen, wodurch der Beladevorgang sich zeitaufwändig gestaltet. Ferner sind oftmals zwei Arbeiter bzw. Anwender nötig, um die einzelnen Gurte um das Stückgut herum zu schlingen und festzuspannen.

In Kenntnis dieses Problems wurde ein aus dem Stand der Technik bekannter Transportwagen für Stückgut vorgeschlagen, der anstelle von einem Vergurtungssystem zur Sicherung des auf der Ladeplattform angeordneten Stückguts bewegliche Seitenwände vorsieht, welche das Stückgut sichern. So zeigt die deutsche Gebrauchsmusterschrift DE 20 2007 019 318 U1 einen Transportwagen, dessen Längsseitenwände bzw. wenigstens eine der Längsseitenwände eine Stützvorrichtung aufweist, mittels der die jeweilige Längsseitenwand aus einer bodennahen Öffnungsstellung in eine zumindest eine obere Lage des gestapelten Stückguts erfassende und seitlich sichernde Schließstellung verlagerbar ist. Wenngleich diese Lösung durchaus Vorteile in der praktischen Anwendung mit sich bringt, kann beispielsweise nachteilig sein, dass dieses System nur dann funktioniert, wenn die unteren Ballenschichten (d. h. die plattformnahmen Ballenschichten) keine deutlich größere Breite aufweisen als die oberen Ballenschichten.

Das aus dem Stand der Technik bekannte System weist somit eine geringere Flexibilität hinsichtlich des geladenen Stückguts auf als die vorstehend beschriebene bekannte Methodik des Vergurtens des Stückguts.

Eine weitere Lösung aus dem Stand der Technik ist in der Offenlegungsschrift DE 10 2011 010 379 A1 offenbart. Dieses Dokument schlägt eine Vorrichtung zum einfachen Sichern von Gutstapeln mithilfe von Sicherungsgurten vor, wobei die Vorrichtung wenigstens zwei Führungsschienen umfasst, die oberhalb der zu sichernden Ladung angeordnet sind, wenigstens zwei Rüstschienen, die in einer Rüstposition vorgesehen sind, und wenigstens zwei Transferschienen, die von einer ersten Position, in welcher die Transferschienen mit den Rüstschienen fluchten, in eine zweite Position beweglich sind, in welcher die Transferschienen mit den Führungsschienen fluchten, sowie in den Schienen beweglich verfahrbaren zur Halterung zumindest eines Sicherungsgurtes. Die Sicherungsgurte werden über der Ladung so angeordnet, dass die freien Enden der Sicherungsgurte seitlich neben der Ladung herunterhängen, und die freien Enden der Sicherungsgurte werden an einem Ladeboden verriegelt und dabei von einer diese haltenden Halteeinrichtung und damit von den zugehörigen Schienen gelöst.

Diese vergleichsweise komplexe Schienenanordnung kann beispielsweise in einer Lagerhalle angeordnet sein und die zu sichernde Ladung wird zum Vergurten unter der Schienenanordnung verfahren. Nachteilig ist dabei, dass die Schienenanordnung nicht Teil des Transportwagens ist und somit nicht an jedem Ort (beispielsweise im landwirtschaftlichen Gebrauch auf dem Feld) einsetzbar ist.

Schließlich ist es aus dem Stand der Technik wohlbekannt, nach oben geöffnete Lastkraftwagenanhänger mittels einer Plane zu schließen, um die zu transportierende Ladung beispielsweise vor Nässe und Wind zu schützen (vgl. auch US 8,226,150 B1).Eine weitere Lösung, um das Ladegut, beispielsweise Heuballen, auf der Ladeplattform mittels einer Plane vor Nässe zu schützen ist beispielsweise in der US 7,189,042 B1 beschrieben, bei der eine Abdeckfolie auf einem die Ladeplattform umgebenden Stützrahmen seitlich abgerollt wird. Zusätzlich können Ladungssicherungsgurte um die Ladung geführt werden. Die Ladeplattform wird seitlich nur durch die Vertikalstreben des Rahmens begrenzt.

Demgegenüber besteht eine Aufgabe der vorliegenden Erfindung darin, die Vorteile von flexiblen Gurten zur Stückgutsicherung bereitzustellen, ohne die aus der Praxis damit verbundenen Nachteile in Kauf nehmen zu müssen.

Die vorliegende Erfindung löst diese Aufgabe durch einen Transportwagen mit den Merkmalen des Anspruchs 1. Weitere vorteilhafte Ausgestaltungen ergeben sich aus der nachfolgenden Beschreibung sowie den abhängigen Ansprüche 2 bis 12.

Erfindungsgemäß wird ein Transportwagen für Stückgut vorgeschlagen, der eine Ladeplattform aufweist, welche das Stückgut im Beladungszustand des Transportwagens zu untergreifen vermag, sowie ein Vergurtungssystem, das eine Sicherung des Stückguts auf der Ladeplattform ermöglicht und wenigstens ein Spannmittel umfasst, das mithilfe einer Fördereinrichtung zumindest abschnittsweise um das auf der Ladeplattform aufgeladene Stückgut herumgeführt werden kann. Die Erfindung dient insbesondere dazu um das aufgeladene Stückgut gegen die Ladeplattform zu spannen. Weiterhin ist die Ladeplattform bevorzugt an ihren stirnseitigen Enden durch Querseitenteile begrenzt, die die Fördereinrichtung des Vergurtungssystems umfassen. Dabei ist es möglich, dass nur an einem der beiden Querseitenteile die Fördereinrichtung des Vergurtungssystems vorgesehen ist oder an beiden Querseitenteilen.

Denkbar ist alternativ oder zusätzlich auch ein Vorsehen der Fördereinrichtung des Vergurtungssystems an einem oder beiden Längsseitenteilen der Transportwagens.

Als Spannmittel kann beispielsweise ein Spanngurt verwendet werden. Alternativ ist jedoch die Gestaltung des Spannmittels in der Form einer netzartigen Struktur oder auch einer Spannfolie denkbar und kann abhängig von dem geladenen Stückgut von Vorteil sein. Eine Spannfolie kann dabei zusätzlich die Funktion übernehmen, das umspannte Stückgut vor äußeren Einflüssen wie z.B. Nässe zu schützen.

In der Praxis hat sich die Verwendung von mehreren Spanngurten als Spannmittel insoweit als sinnvoll erwiesen, als dass hier bereits bekannte Spanngurte verwendet werden können, wobei die Besonderheit der vorliegenden Erfindung darin zu sehen ist, dass diese Spanngurte mit Hilfe einer gemeinsamen Fördereinrichtung zumindest abschnittsweise um das Stückgut herumgeführt und gespannt werden können.

Es ist somit bei der vorliegenden Erfindung nicht mehr notwendig, dass der Anwender jeden einzelnen der Spanngurte separat um das Stückgut herumschlingt und festspannt. Stattdessen wird diese mit einer gemeinsamen Fördereinrichtung bewerkstelligt, so dass es auch einem einzelnen Anwender ohne die Hilfe eines zweiten möglich ist, das geladene Stückgut auf dem Transportwagen einfach und schnell zu sichern.

Die Spannmittel, wie vorstehend vorgeschlagen, haben den Vorteil gegenüber der aus dem Stand der Technik bekannten Gitterkonstruktion (vgl. DE 20 2007 019 318 U1), dass sie vergleichsweise leicht und formflexibel gebaut sind und gegebenenfalls bei einer Beschädigung einfach und kostengünstig ersetzt werden können.

Es kann weiterhin vorgesehen sein, dass das wenigstens eine Spannmittel des Vergurtungssystems entlang einer der Längsseiten der Ladeplattform angeordnet ist, um mit Hilfe der Fördereinrichtung zumindest abschnittsweise in eine Richtung quer zur Längserstreckung des Transportwagens um das auf der Ladeplattform aufgeladene Stückgut herumgeführt werden kann. Wie nachfolgend näher ausgeführt wird, ist es dabei nicht nötig, dass das wenigstens eine Spannmittel vollständig um das auf der Ladeplattform aufgeladene Stückgut herumgeführt wird. Alternativ kann es auch ausreichend sein, einen Winkel von beispielsweise etwa 120° zu umspannen und dabei noch immer eine ausreichende Sicherung des Stückguts zu gewährleisten. Entscheidend ist, dass die Sicherung des Stückguts durch ein Verspannen gegen die Ladeplattform erfolgt.

Das Vergurtungssystem kann ferner eine Spanneinrichtung zum Spannen des wenigstens einen Spannmittels aufweisen. So kann die Spanneinrichtung eine um ihre Längsachse drehbare Spannwelle aufweisen, auf der das wenigstens eine Spannmittel zumindest abschnittsweise auf- und abwickelbar ist. Vorzugsweise kann die Spannwelle wenigstens eine schlitzförmige Öffnung aufweisen, durch welche das wenigstes eine Spannmittel sich hindurch zu erstrecken vermag.

Alternativ oder zusätzlich kann die Spanneinrichtung eine Welle zum Spannen des Spannmittels umfassen, wobei das wenigstens eine Spannmittel durch Drehung der Achse um deren Längsachse auf diese auf- und abwickelbar ist. Die Welle erfüllt dabei die Funktion des Spannens oder bei einer Gestaltungsvariante, bei der zusätzlich eine Spannwelle angebracht ist, des Vorspannens.

Alternativ oder zusätzlich kann die Spanneinrichtung eine Hohlwelle sowie eine darin angeordnete Achse umfassen, wobei das wenigstens eine Spannmittel durch Drehung der Achse relativ zu der Hohlwelle auf- und abwickelbar ist. Bei dieser Gestaltungsvariante erfüllen die Achse mit der Hohlwelle die Funktion des Spannens oder bei einer Gestaltungsvariante, bei der zusätzlich eine Spannwelle angebracht ist, des Vorspannens des Spannmittels.

Dabei weist die Hohlwelle vorzugsweise wenigstens eine schlitzförmige Öffnung auf, durch welche ein freies Ende des wenigstens einen Spannmittels nach außen zu ragen vermag.

Die Spanneinrichtung dient folglich bei allen Ausgestaltungsvarianten zum Spannen des wenigstens einen Spannmittels, sobald dieses mit dem gewünschten Umschlingungswinkel um das aufgeladene Stückgut herumgeführt ist. Dabei kann das wenigstens eine Spannmittel beispielsweise bei einer Ausgestaltung mit einer Hohlwelle und einer darin aufgenommenen Achse durch eine relative Drehbewegung der Achse zu der diese umgebenden Hohlwelle aufgewickelt werden. In der Praxis wird regelmäßig die Achse gedreht und das Spannmittel auf die Achse aufgewickelt, während die Hohlwelle keine Drehbewegung durchführt. Im aufgewickelten Zustand ist das wenigstens eine Spannmittel mit Ausnahme seines freien Endes, welches durch eine entsprechende Öffnung in der Hohlwelle nach außen ragt, fast vollständig innerhalb der Hohlwelle aufgenommen. Auf diese Weise wird zudem eine besonders unkomplizierte und sichere Aufbewahrung der Spannmittel des Vergurtungssystems bereitgestellt. Grundsätzlich ist jedoch alternativ auch denkbar, dass die Hohlwelle die Drehbewegung ausführt oder dass das Spannmittel auf die außenliegende Hohlwelle aufgewickelt wird.

Das wenigstens eine Spannmittel kann zumindest mit einem Endabschnitt drehfest mit einer Komponente der Spanneinrichtung verbunden sein, wodurch das Drehen der Welle, der Achse oder der Hohlwelle ein Aufwickeln des wenigstens einen Spannmittels und umgekehrt das Abwickeln des wenigstens einen Spannmittels eine Drehung der Welle, der Achse oder der Hohlwelle zur Folge hat.

Bei einer Ausführungsform, die nur die Spannwelle zum Spannen des Spannmittels umfasst, kann durch Drehung der Spannwelle das Spannmittel auf diese auf- bzw. von dieser abgewickelt werden.

Die Spanneinrichtung kann ferner in einem Bereich, in dem das wenigstens eine Spannmittel auf eine Komponente der Spanneinrichtung auf- und abwickelbar ist, eine vergrößerte Haftreibung zwischen dieser Komponente der Spanneinrichtung und dem Spannmittel bereitstellen.

Die Spanneinrichtung kann ferner wenigstens eine Antriebseinheit umfassen, die zum Antrieb des drehenden Teils der Spanneinrichtung, beispielsweise der in der Hohlwelle angeordneten Achse, der Welle oder der Spannwelle, dient und die relative Drehbewegung veranlasst. Die Antriebseinheit ersetzt dabei einen manuellen Antrieb eines Anwenders, beispielsweise eine Kurbel oder dergleichen, und ermöglicht hierdurch ein noch komfortableres Bedienen des Vergurtungssystems.

Die Hohlwelle kann insgesamt eine einzige schlitzförmige Öffnung aufweisen, durch die sich alle freien Enden (bei mehreren Spannmitteln) erstrecken, oder jeweils eine Öffnung, die einem Spannmittel zugeordnet ist. Gleiches gilt für die wenigstens eine schlitzförmige Öffnung der Spannwelle, durch die sich das Spannmittel durch die Spannwelle hindurch zu erstrecken vermag.

Weiterhin kann die Spanneinrichtung eine Überlastsicherung in der Form aufweisen, dass ein Spannen bzw. Aufwickeln des wenigstens einen Spannmittels nur bis zu einem vorgegebenen Schwellenwert möglich ist. Wird dieser Schwellenwert (beispielsweise ein Zugkraftwert von etwa 25 N) überschritten, verhindert die Überlastsicherung, dass das von der Antriebseinheit oder dem Anwender manuell eingeleitete Drehmoment auf das wenigstens eine Spannmittel übertragen wird. Die Überlastsicherung kann beispielsweise in der Art einer Rätschkupplung, eines Drehmomentbegrenzers oder dergleichen ausgebildet sein und gewährleistet, dass die Spannmittel keiner unzulässig hohen Zugkraft ausgesetzt werden. Auf diese Weise kann die Lebensdauer der Spannmittel erhöht werden.

Die Überlastsicherung kann bei einer ersten Variante beispielsweise an der Schnittstelle von Antriebseinheit und der sich drehenden Komponente der Spanneinrichtung, beispielsweise Welle oder Achse, vorgesehen sein und dann wenn diese infolge der auf das oder die Spannmittel einwirkenden Zugkräfte feststeht die Kraftübertragung von der Antriebseinheit auf die Welle oder Achse unterbrechen. In diesem Fall würde bei mehreren Spannmitteln keines der Spannmittel mehr nachgespannt.

Anstelle einer Überlastsicherung im Bereich der Schnittstelle der Antriebseinheit und der Welle oder Achse kann jedoch auch vorgesehen sein, dass jedes Spannmittel mit einer Überlastsicherung im Verbindungsbereich zur sich drehenden Komponente der Spanneinrichtung versehen ist. Auf diese Weise können die einzelnen Spannmittel des Vergurtungssystems unabhängig voneinander auf eine vorgegebene maximale Zugkraft gespannt werden, was insbesondere dann vorteilhaft ist, wenn die Ladeplattform nicht gleichmäßig mit Stückgut beladen ist. Eine denkbare Ausführungsform sieht beispielsweise gurtförmige Spannmittel vor, welche auf Gurtrollen aufgewickelt werden können, wobei jede Gurtrolle über eine Überlastsicherung (Rätschkupplung) mit der Welle oder Achse verbunden ist. Überschreitet die auf einen Gurt einwirkende Zugkraft einen bestimmten Schwellenwert, rutscht die Rätschkupplung durch, so dass die Drehbewegung der Welle oder Achse nicht mehr auf die zugehörige Gurtrolle übertragen wird.

Alternative Ausführungsformen zu den vorgestellten Systemen einer Überlastsicherung sind selbstverständlich ebenfalls denkbar.

Bei einer besonders günstigen Gestaltungsvariante ist wenigstens eine Komponete der Spanneinrichtung zum Vorspannen des wenigstens einen Spannmittels dient die Spannwelle insbesondere zum Sichern des wenigstens einen vorgespannten Spannmittels, So kann, wie vorstehend ausgeführt, die Spanneinrichtung durch eine Überlastsicherung vor einer Überlastung des Systems infolge der Drehbewegung zum Auf- und Abwickeln des Spannmittels geschützt werden. Dieses hat jedoch zur Folge, dass bei einem ungewollten Umkippen des Transportwagens die Überlastsicherung aufgrund der Last des ebenfalls gekippten Stückguts nachgibt und die Ladung folglich nicht mehr gesichert ist. Gerade in solchen Fällen ist eine zusätzliche Sicherung des Ladung jedoch wünschenswert. Hierfür kann die Spannwelle als zusätzliche Komponente der Spanneinrichtung genutzt werden.

Nach erfolgtem Spannvorgang mittels Welle, Achse und Hohlwelle oder anderer als Vorspanner denkbarer Komponenten mit einer Überlastsicherung, wird die Spannwelle ebenfalls um einen vorbestimmten Winkel, beispielsweise um 180 ° um ihre Längsachse gedreht. Das wenigstens eine Spannmittel erstreckt sich durch die schlitzförmige Öffnung durch die Spannwelle und wird durch deren Drehung in unmittelbare Anlage an die Außenoberfläche der Spannwelle gebracht. Diese kann, wie vorstehend ausgeführt, zumindest abschnittsweise mit einer Beschichtung, einer Oberflächenstruktur oder mit zusätzlichen Elementen (wie beispielsweise Spikes oder Gummielementen) versehen sein, die eine erhöhte Haftreibung des anliegenden Spannmittels bereitstellen. Auf diese Weise wird das wenigstens eine Spannmittel in seinem gespannten Zustand durch die bestehende Haftreibung an der Spannwelle gesichert.

Die Spannwelle selbst kann entweder in dieser sichernden Stellung mechanisch fixiert werden, z.B. durch einen Haltebolzen, der sowohl mit der Spannwelle als auch mit einem ortsfesten Teil des Transportwagens in Eingriff steht. Alternativ kann die Sicherung auch über den Antrieb der Spannwelle erfolgen. Denkbar ist beispielsweise ein hydraulischer Antrieb der Spannwelle, wobei an diesem ein Sperrventil die Spannwelle in der sichernden Stellung hält. Alternativ oder in Kombination mit dem hydraulischen Antrieb kann auch eine Zahnstange zum Einsatz kommen, die wiederum mechanisch in einer Stellung fixiert wird, in der sich die Spannwelle in ihrer sichernden Stellung befindet.

Weiterhin kann vorgesehen sein, dass die Fördereinrichtung wenigstens ein Führungsseil und/oder eine Führungsstange umfasst, mit dem oder mit der das wenigstens eine Spannmittel in der Weise verbindbar ist, dass es mittels des Führungsseils oder der Führungsstange zumindest abschnittsweise um das auf der Ladeplattform aufgeladene Stückgut herumgeführt werden kann.

Bei dieser Ausführungsform kann beispielsweise das freie Ende des wenigstens einen Spannmittels mit dem Führungsseil oder der Führungsstange verbunden werden. Bei mehreren vorgesehenen Spannmitteln ergibt sich hieraus logischerweise, dass bei einer Verlagerung des Führungsseils oder der Führungsstange alle damit verbundenen Spannmittel ebenfalls entsprechend verlagert werden können, wodurch der erfindungsgemäße Effekt erzielt wird, dass die einzelnen Spannmittel nicht separat um das Stückgut herumgeführt werden müssen.

Bei der Variante mit einer Führungsstange kann die Führungsstange vorteilhaft die Spanneinrichtung oder Komponenten davon zum Spannen oder Sichern des wenigstens einen Spannmittels umfassen. Auf diese Weise kann eine Funktionsvereinigung der Führungsstange und der Spanneinrichtung erreicht werden, wodurch aufgrund einer geringeren Anzahl von Einzelteilen das Vergurtungssystem einfacher und kostengünstiger herzustellen sein kann.

Die Fördereinrichtung kann ferner wenigstens einen, bevorzugt zwei Haltearme zum Führen und Halten des Führungsseils oder der Führungsstange umfassen, wobei der wenigstens eine Haltearm an einem der Querseitenteile angeordnet ist. Insbesondere kann dem wenigstens einen Haltearm eine Antriebseinrichtung zugeordnet sein, mittels derer der wenigstens eine Haltearm zum Führen und Halten des Führungsseils oder der Führungsstange relativ zu der Ladeplattform verlagerbar ist. Der wenigstens eine Haltearm dient somit sowohl zum Übertragen einer Verlagerungsbewegung auf das Führungsseil bzw. auf die Führungsstange und zum anderen zum Halten des Führungsseils oder der Führungsstange in der entsprechenden Position.

Alternativ zu einem Haltearm kann jedoch auch wenigstens ein, bevorzugt zwei Halterahmen zum Führen und Halten des Führungsseils oder der Führungsstange vorgesehen sein, wobei der wenigstens eine Halterahmen an einem der Querseitenteile angeordnet ist. Im Unterschied zu dem wenigstens einen Haltearm kann der wenigstens eine Halterahmen ferner wenigstens eine Führungsschiene umfassen, in der ein Abschnitt des Führungsseils oder der Führungsstange direkt oder indirekt geführt aufgenommen werden kann. Beispielsweise ist es denkbar, an den freien Enden des Führungsseils jeweils einen Bolzen oder dergleichen zu befestigen, die wiederum in den Führungsschienen zweier an den Querseitenteilen des Transportwagens angebrachten Halterahmen geführt werden können. An dem Bolzen kann zusätzlich eine Fixiervorrichtung (beispielsweise eine Spannschraube oder dergleichen) vorgesehen sein, die eine Fixierung des Abschnitts des Führungsseils relativ zu der Führungsschiene herstellen kann, sobald dies gewünscht ist. Weiterhin kann ein Verbindungsteil, beispielsweise in der Form einer starren Stange, zwischen dem als Führungsteil wirkenden Bolzen und dem jeweils zugeordneten Abschnitt des Führungsseils angeordnet sein, um den Umreifungsradius gegenüber dem Halterahmen weiter zu vergrößern. Das gleiche Funktionsprinzip lässt sich selbstverständlich auch auf eine Führungsstange übertragen.

Schließlich kann dem wenigstens einen Haltearm oder alternativ dem wenigstens einen Halterahmen eine Antriebseinrichtung zugeordnet sein, mittels derer der wenigstens eine Haltearm oder der Abschnitt des Führungsseils oder der Führungsstange, welche in der Führungsschiene aufgenommen ist, relativ zu der Ladeplattform verlagerbar ist.

Der vorstehend beschriebene Transportwagen mit seinem Vergurtungssystem kann folglich sowohl manuell durch einen einzigen Anwender bedienbar sein, der beispielsweise den Haltearm oder die in der Führungsschiene aufgenommenen Abschnitte des Führungsseils oder der Führungsstange in eine gewünscht Position zur Sicherung des aufgeladenen Stückguts überführt und in dieser Position sichert. Alternativ ist jedoch auch die Ausgestaltung mit einer Antriebseinrichtung denkbar und insbesondere dann von Vorteil, wenn ein besonders einfach zu bedienender Transportwagen für Stückgut gewünscht ist.

Eine entsprechende Antriebseinrichtung kann beispielsweise elektrisch, hydraulisch oder pneumatisch betrieben sein. Es kann von Vorteil sein, dass die Antriebseinrichtung auch dazu eingerichtet ist, den Haltearm oder den jeweiligen Abschnitt des Führungsseils oder der Führungsstange in der gewünschten Position zur Sicherung des Stückguts zu halten. Alternativ oder zusätzlich kann jedoch auch ein Sicherungssystem vorgesehen sein, beispielsweise eine Vorrichtung zum Einhaken oder Einrasten der Führungsstange oder des Führungsseils in der gewünschten Position.

Bei einer Weiterentwicklung der vorliegenden Erfindung kann zudem eine Umlenkeinrichtung zum Umlenken wenigstens eines Spannmittels vorgesehen sein, wobei das wenigstens eine Spannmittel mittels der Umlenkeinrichtung zumindest abschnittsweise in einer Richtung im Wesentlichen parallel zu der Längsachse der Ladeplattform geführt ist.

In der Praxis hat sich gezeigt, dass beispielsweise die Spanneinrichtung oder zumindest ein Großteil ihrer Komponenten besonders platzsparend und sicher im Bereich des Unterbodens der Transportwagens aufgenommen bzw. an diesem angebracht sein kann. Bei einer solchen Ausgestaltung ist jedoch die maximale Erstreckung der Komponenten der Spanneinrichtung in Längsrichtung (parallel zu der Längsachse der Ladeplattform) durch die Radachsen des Transportwagens begrenzt. Da jedoch auch der Bereich der Ladeplattform zur Aufnahme und Sicherung von Stückgut genutzt werden soll, der sich oberhalb der Radachsen des Transportwagens befindet, ist es notwendig, wenigstens ein Spannmittels zumindest abschnittsweise aus dem Bereich zwischen den Radachsen (in dem die Spanneinrichtung angebracht sein kann) in einen Bereich über den Radachsen umzulenken. Hierzu dient die Umlenkeinrichtung.

Diese kann insbesondere wenigstens ein Paar Umlenkrollen umfassen, die einem Spannmittel zugeordnet sind und die das zugeordnete Spannmittel in der gewünschten Weise umzulenken vermögen. Hierzu kann das Spannmittel, beispielsweise ein Spanngurt, mittels der ersten Umlenkrolle ein erstes Mal verschränkt werden und auf diese Weise um 90° umgelenkt werden, wobei das Spannmittel infolge seiner Verschränkung nicht mehr im Wesentlichen quer zur Längsachse der Ladeplattform verläuft sondern parallel. Mittels der zweiten Umlenkrolle kann das Spannmittel erneut verschränkt werden und zugleich um 90° umgelenkt werden, wobei das Spannmittel dann infolge seiner weiteren Verschränkung nicht mehr im Wesentlichen parallel zur Längsachse der Ladeplattform verläuft sondern wieder quer. Ein Umgreifen und Spannen von Stückgut, das sich oberhalb der Radachsen auf der Ladeplattform befindet, ist somit möglich.

Die vorliegende Erfindung wird nachfolgend detaillierter unter Bezugnahme auf die beigefügten Zeichnungen beschrieben, wobei diese bevorzugte Ausführungsformen der Erfindung beispielhaft darstellen, bei denen die einzelnen Merkmale der Erfindung miteinander kombiniert sind. Der Fachmann wird diese jedoch selbstverständlich auch losgelöst voneinander betrachten und/oder zu sinnvollen Kombinationen zusammenfassen können.

Es zeigen schematisch:

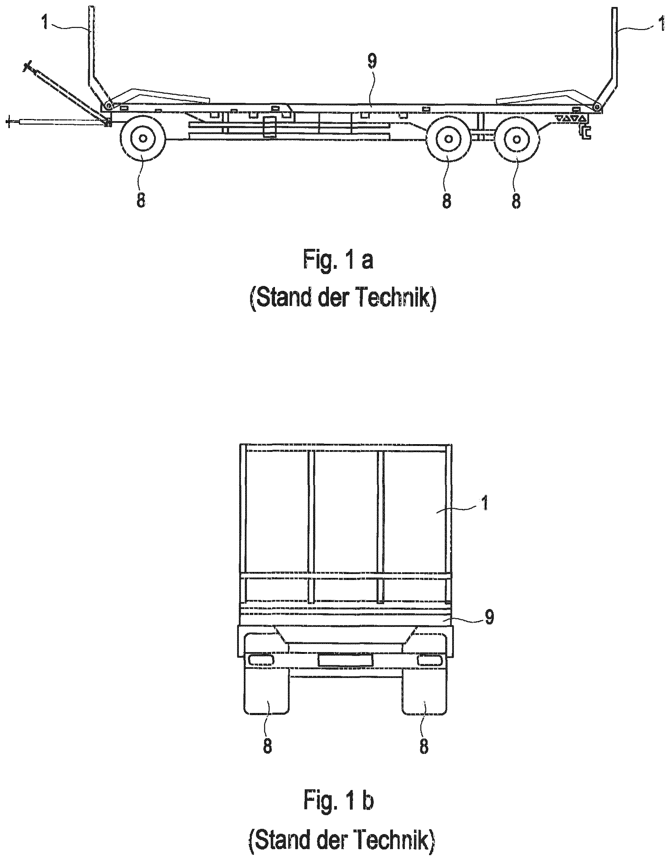

- Figur 1a: eine Seitenansicht eines Transportwagens gemäß dem Stand der Technik;
- Figur 1 b: eine Rückansicht des Transportwagens gemäß Fig. 1a;
- Figur 2a: eine Seitenansicht eines erfindungsgemäßen Transportwagens gemäß einer ersten Ausführungsform;
- Figur 2b: eine Rückansicht des erfindungsgemäßen Transportwagens gemäß Fig. 2a;
- Figur 3a: eine Seitenansicht eines erfindungsgemäßen Transportwagens gemäß einer zweiten Ausführungsform;
- Figur 3b: eine Rückansicht des erfindungsgemäßen Transportwagens gemäß Fig. 3a;
- Figur 3c: eine Rückansicht des erfindungsgemäßen Transportwagens gemäß einer alternativen dritten Ausführungsform; und
- Figur 3d: eine Rückansicht des erfindungsgemäßen Transportwagens gemäß einer alternativen vierten Ausführungsform;
- Figur 4a: eine teilgeschnittene Ansicht eines erfindungsgemäßen Transportwagens gemäß einer alternativen fünften Ausführungsform;
- Figur 4b: eine Rückansicht des erfindungsgemäßen Transportwagens gemäß der Ausführungsform der Figur 4a;
- Figur 4c: eine Rückansicht des erfindungsgemäßen Transportwagens gemäß einer alternativen sechsten Ausführungsform; und
- Figur 5: eine Detailansicht einer Spanneinrichtung eines erfindungsgemäßen Transportwagens.

In den Figuren 1a und 1b ist allgemein ein Transportwagen gezeigt, wie er aus dem Stand der Technik bekannt ist. Dieser umfasst einen Wagenrahmen 9, der zugleich auch die Ladeplattform für das zu transportierende Stückgut bereitstellt. Die Ladeplattform wird an ihren stirnseitigen Enden (in Figur 1a vorne und hinten) durch Querseitenteile 1 begrenzt. Der Wagenrahmen 9 sitzt abgestützt über das Fahrwerk und die Radachsen oberhalb der Räder 8 des Transportwagens.

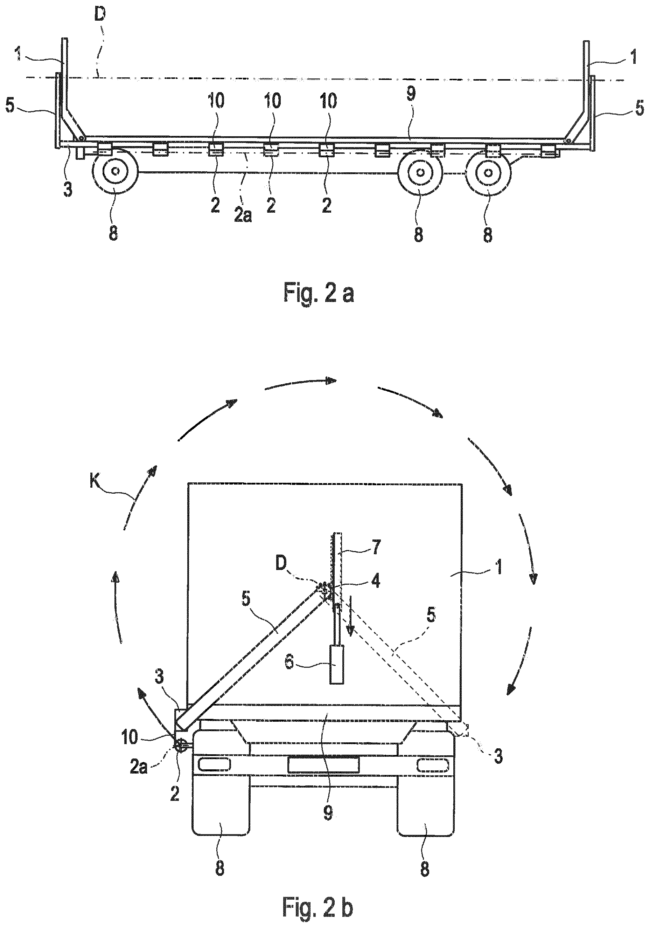

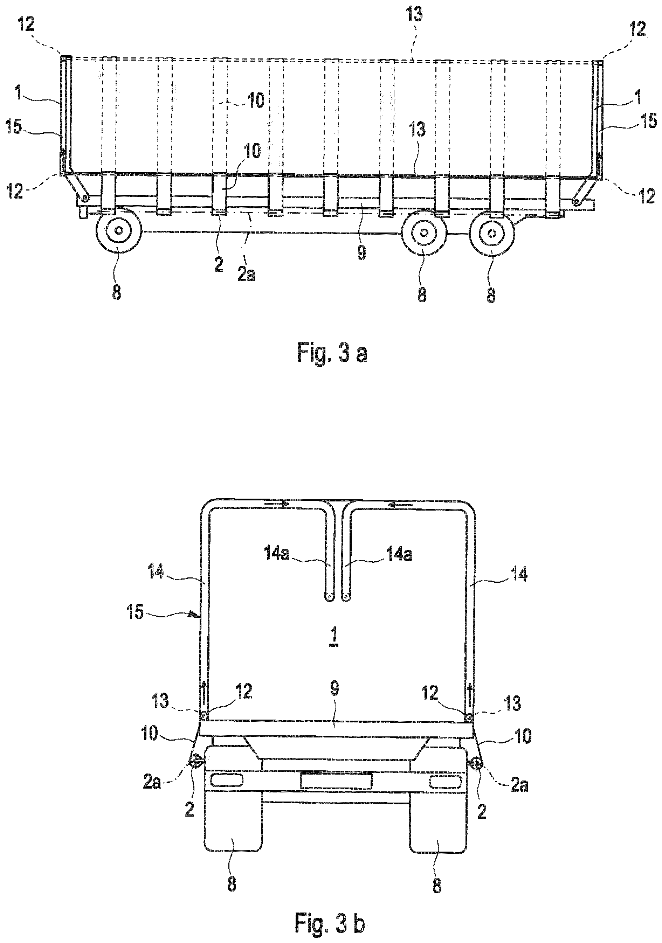

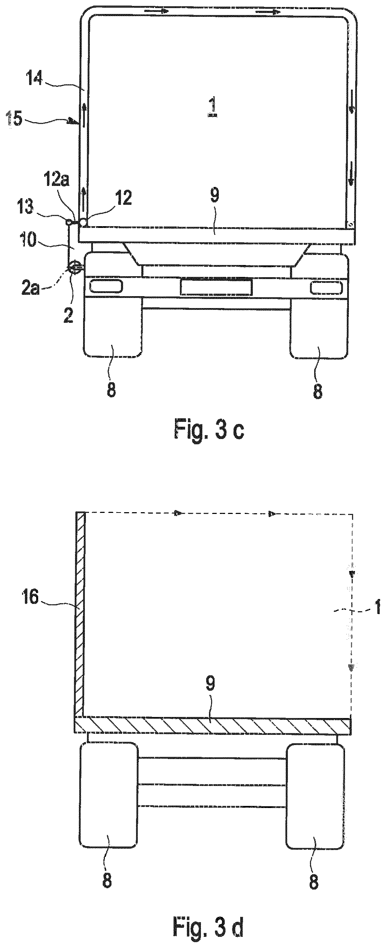

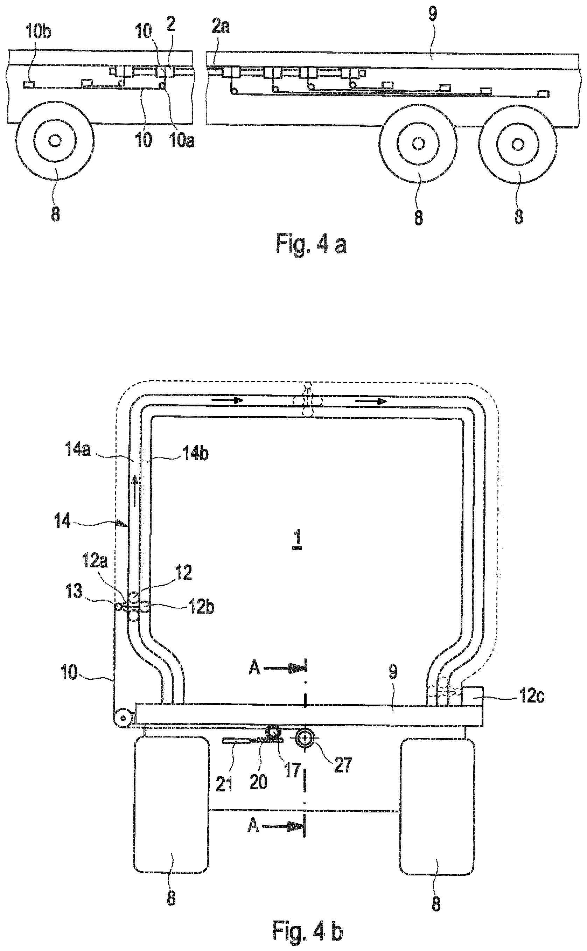

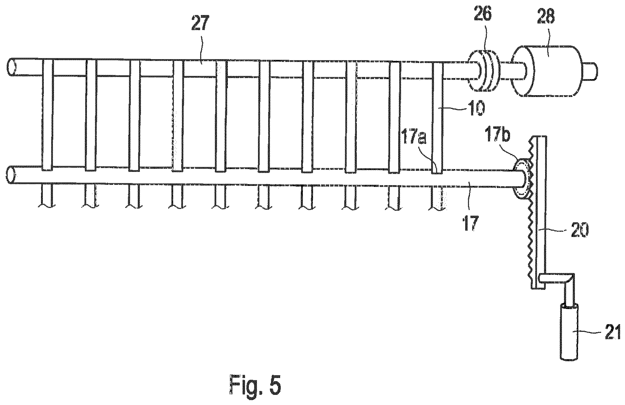

Die Figuren 2a und 2b zeigen eine erste erfindungsgemäße Variante eines Transportwagens in Seiten- bzw. Rückansicht, während die Figuren 3a, 3b eine zweite erfindungsgemäße Variante eines Transportwagens in Seiten- bzw. Rückansicht zeigen. In den Figuren 3c und 3d sind zwei weitere erfindungsgemäße Varianten eines Transportwagens in Rückansicht gezeigt. Die Figuren 4a-4c stellen weitere erfindungsgemäße Varianten eines Transportwagens in Rückansicht bzw. in einer teilgeschnittenen Ansicht (Figur 4a) dar, während die Figur 5 schließlich eine Spanneinrichtung des erfindungsgemäßen Transportwagens detaillierter offenbart. Übereinstimmende Merkmale wurden mit den gleichen Bezugszeichen referenziert.

Bei der ersten Variante eines erfindungsgemäßen Transportwagens ist jeweils an dem Querseitenteil 1 des erfindungsgemäßen Transportwagens eine Fördereinrichtung vorgesehen, die einen Haltearm 5 umfasst. Zwischen den Haftearmen 5 erstreckt sich entlang der Längserstreckung des Transportwagens eine Führungsstange 3, die bei einer Drehbewegung der Haltearme 5 um eine Drehachse D eine kreisförmige Verlagerungsbewegung K ausführt (vgl. Figur 2b).

An der Führungsstange 3 sind die freien Enden mehrerer gurtförmiger Spannmittel befestigt. Diese werden bei einer Verlagerung der Führungsstange 3 entsprechend mit dieser mitbewegt. Die gurtförmigen Spannmittel sind ihrerseits auf Gurtrollen 2 aufgewickelt und können infolge der kreisförmigen Verlagerungsbewegung der Führungsstange von den Gurtrollen 2 abgewickelt werden. Hierzu sind die Gurtrollen 2 auf einer Achse 2a drehbar angeordnet.

Die beiden Querseitenteile 1 stützen nicht nur die Haltearme 5, sondern auch eine für diese vorgesehene Antriebseinrichtung, welche sich in dem dargestellten Beispiel aus einem hydraulischen Zylinder 6 und einer gezahnten Antriebsstange 7 zusammensetzt und durch eine Kraftübertragung im Kraftangriffspunkt 4 eine Schwenkbewegung des Haltearms 5 um die Drehachse D veranlasst.

Grundsätzlich ist es jedoch selbstverständlich ebenfalls denkbar, anstelle der gezeigten Antriebseinrichtung ein alternatives System zum Antrieb der Haltearme 5 bereitzustellen, beispielsweise einen elektrischen Motor, einen hydraulischen oder pneumatischen Antrieb.

Bei der zweiten Ausführungsform der Figuren 3a und 3b sind im Bereich der Querseitenteile 1 keine Haltearme 5 angeordnet, welche um eine Drehachse D bewegt werden. Stattdessen umfassen die Querseitenteile jeweils einen Halterahmen 15, der eine oder mehrere Führungsschienen 14 aufweisen kann (vgl. Figur 3b). Im Unterschied zu der ersten Ausführungsform ist ferner zwischen den beiden Halterahmen 15 keine Führungsstange, sondern ein Führungsseil 13 gespannt, das mit seinen Endabschnitten mit Führungsteilen 12 verbunden ist. Die Führungsteile 12, beispielsweise in der Form von Bolzen oder dergleichen, sind ihrerseits in den Führungsschienen 14 der Halterahmen 15 verschiebbar und geführt aufgenommen. Durch eine Verlagerung der Führungsteile 12 in dem vorderen und dem hinteren Halterahmen 15 wird in ähnlicher Weise wie bei der ersten Erfindungsvariante eine Verlagerung des Führungsseils 13 veranlasst, wodurch die damit verbundenen freien Enden der gurtförmigen Spannmittel 10 ebenfalls entsprechend verlagert werden.

Die Führungsteile 12 können selbstverständlich auch in den Führungsschienen 14 fixierbar ausgebildet sein, beispielsweise durch Vorsehen eines Feststellmechanismus in Form einer Stellschraube oder dergleichen.

Auch bei dieser Variante sind die gurtförmigen Spannmittel 10 auf Gurtrollen 2 aufgerollt und können von diesen abgerollt werden.

Bei einer besonders komfortablen Ausführungsform kann vorgesehen sein, dass die Gurtrollen 2 bei beiden Varianten der vorliegenden Erfindung Teil einer Spanneinrichtung zum Spannen der gurtförmigen Spannmittel sind. Eine solche Spanneinrichtung kann beispielsweise eine Hohlwelle umfassen sowie eine darin angeordnete Achse, auf der das wenigstens eine Spannmittel durch Drehbewegung der Achse relativ zu der Hohlwelle auf- und abwickelbar ist. Dabei kann die Drehbewegung der Achse beispielsweise motorisch angetrieben oder manuell eingeleitet werden.

Alternativ zu dieser Ausgestaltungsvariante einer Spanneinrichtung ist in Figur 5 eine weitere Ausführungsform dargestellt. Die dort gezeigte Spanneinrichtung umfasst anstelle der Achse 2a eine angetriebene Welle 27 zum Auf- und Abwickeln der gurtförmigen Spannmittel 10. Die gurtförmigen Spannmittel 10 können wie bei anderen Ausführungsformen auf Gurtrollen aufgewickelt sein, welche mit der Welle 27 drehfest verbunden sind, oder aber an einem ihrer freien Enden mit der Welle 27 verbunden sein. Die Welle 27 kann beispielsweise hydraulisch über einen schematisch dargestellten hydraulischen Antrieb 28 angetrieben werden. An der Schnittstelle zwischen der Welle 27 und den Spannmitteln 10 können Drehmomentbegrenzer 26 vorgesehen sein, wie beispielsweise eine Rätscht- oder Rutschkupplung oder dergleichen, die der Überlastsicherung der Welle 27 und dem zugehörigen Antrieb 28 dienen.

Zusätzlich zu der Welle 27 ist eine sogenannte Spannwelle 17 vorgesehen, die zum automatischen Spannen und insbesondere Sichern der gespannten gurtförmigen Spannmittel 10 dient. Hierzu weist die Spannwelle 17 eine oder mehrere schlitzförmige Öffnungen 17a auf, durch die sich die gurtförmigen Spannmittel 10 durch die Welle 27 hindurch erstrecken können. In einer Ausgangsstellung verlaufen die gurtförmigen Spannmittel 10 gerade durch die Spannwelle 17.

Soll die Spannwelle 17 jedoch zum Nachspannen oder insbesondere zur Sicherung der gurtförmigen Spannmittel 10 genutzt werden, wird die Spannwelle 17 um einen vorbestimmten Winkel um ihre Längsachse gedreht, wodurch die sich durch die wenigstens eine schlitzförmige Öffnung 17a erstreckenden gurtförmigen Spannmittel 10 in Anlage an die äußere Oberfläche der Spannwelle 17 gebracht werden.

Zum Drehen der Spannwelle 17 kann beispielsweise, wie in der Fig. 5 gezeigt, ein zusätzlicher Antrieb genutzt werden, der in der dargestellten Ausführungsform eine Zahnstange 20 umfasst, welche mittels eines hydraulischen Zylinders 21 in translatorische Bewegung versetzt werden kann. Ein damit in Eingriff stehendes Zahnrad 17b, welches mit der Spannwelle 17 verbunden oder integral an dieser ausgebildet ist, wird hierdurch in eine rotatorische Bewegung überführt.

einer gewünschten Stellung der Spannwelle 17, in der die gurtförmigen Spannmittel 10 gespannt sind und an der Außenoberfläche der Spannwelle 17 anliegen, kann die Spannwelle 17 selbst oder aber eine Antriebskomponente der Spannwelle 17 in ihrer Stellung gesichert werden. Hierbei ist beispielsweise eine mechanische Verriegelung der Zahnstange 20 denkbar, die beispielsweise mit einem Bolzen oder dergleichen am Wagenrahmen 9 verriegelt werden kann. Alternativ ist es jedoch auch denkbar, an dem hydraulischen Antrieb ein entsprechendes Sperrventil vorzusehen, das die Zahnstange 20 zuverlässig in ihrer gewünschten Stellung hält. Weitere alternative Ausgestaltungsmöglichkeiten sind selbstverständlich ebenfalls denkbar.

Um eine sichere Anlage der gurtförmigen Spannmittel 10 an der Außenoberfläche der Spannwelle 17 zu gewährleisten, kann diese zumindest in den Bereichen, in denen die gurtförmigen Spannmittel 10 zur Anlage gelangen können, eine verbesserte Haftreibung bereitstellen. Dies kann durch eine entsprechende Oberflächenstruktur der Spannwelle selbst oder durch zusätzliche Elemente, die an der Spannwelle angebracht werden können, erfolgen. Beispielsweise kann die Spannwelle in ihrer Außenumfangsfläche aufgeraut sein, eine Beschichtung (beispielsweise eine Gummierung) aufweisen oder es können schalenförmige Gummielemente, Elemente mit Spikes oder dergleichen an der Spannwelle 17 angebracht sein. Die zusätzlichen Elemente, wie beispielsweise schalenförmige Gummielemente, können beispielsweise durch Verschraubung, Verklebung oder dergleichen an der Spannwelle 17 angebracht sein.

Insbesondere bei den Ausführungsformen, bei denen eine solche zusätzliche Spannwelle 17 zur Sicherung der gurtförmigen Spannmittel 10 vorgesehen sein soll, ist eine Anordnung der Spanneinrichtung am Unterboden des Transportwagens besonders günstig und platzsparend. Eine solche Anordnung ist beispielsweise in der Figur 4b gezeigt. Weiterhin kann mittels einer zusätzlichen Spannwelle 17 ein Nachspannen der Spanmittel jederzeit erfolgen, ohne dass hierfür die Fixierung der Spannmittel gelöst werden muss.

Wie jedoch anhand der Figur 4a dargestellt, welche eine entlang der Linie A-A geschnittene Ansicht der Figur 4b ist, ergibt sich hieraus ein weiteres technisches Problem. So ist bei einer entsprechenden Anordnung die maximale Erstreckung der Komponenten der Spanneinrichtungen in Längsrichtung (d.h. parallel zu der Längsachse der Ladeplattform) durch die Radachsen der Räder 8 des Transportwagens begrenzt. Da jedoch auch der Bereich der Ladeplattform zur Aufnahme und Sicherung von Stückgut genutzt werden soll, der sich oberhalb der Radachsen der Räder 8 des Transportwagens befindet, ist es notwendig, wenigstens eines der gurtförmigen Spannmittel 10 zumindest abschnittsweise aus dem Bereich zwischen den Radachsen in einen Bereich über den Radachsen umzulenken. Hierzu kann erfindungsgemäß eine Umlenkeinrichtung vorgesehen sein.

Diese umfasst in der dargestellten Ausführungsform für jedes umzulenkende gurtförmige Spannmittel 10 ein paar Umlenkrollen, die zum Umlenken und Verschränken des gurtförmigen Spannmittels 10 dienen. So wird ein gurtförmiges Spannmittel 10, das sich im Wesentlichen senkrecht zu der Längsachse des Transportwagens aus dem Bereich zwischen den Radachsen heraus erstreckt mit einer ersten Umlenkrolle 10a verschränkt und um 90° umgelenkt, so dass sich dieses nunmehr im Wesentlichen parallel zu der Längsachse des Transportwagens und damit auch der Ladeplattform (nach vorne oder hinten) erstreckt. Mittels der zweiten Umlenkrolle 10b kann das Spannmittel 10 erneut verschränkt und zugleich um 90° umgelenkt werden, so dass das gurtförmige Spannmittel 10 nunmehr wieder quer, d.h. etwa in einem 90°-Winkel zu der Längsachse der Ladeplattform verläuft. Ausgehend hiervon kann das umgelenkte Spannmittel 10 auch beispielsweise im Bereich oberhalb der Radachsen, d.h. über den Rädern 8, zum Spannen von entsprechendem Stückgut genutzt, werden.

Anstelle der in der Figur 3b gezeigten zwei Führungsschienen 14, die einen Abschnitt aufweisen, welcher in den Laderaum des Transportwagens hineinragt (Abschnitt 14a in Figur 3b), kann auch eine einzige umlaufende Führungsschiene oder eine im Wesentlichen umlaufende Führungsschiene vorgesehen sein, wie beispielsweise in der Figur 3c dargestellt. Weiterhin kann, wie ebenfalls bei der Ausführungsform der Figur 3c gezeigt, zwischen dem jeweiligen Führungsteil 12 und dem Führungsseil 13 ein Verbindungsteil 12a vorgesehen sein, das einen größeren Umreifungsradius durch die gurtförmigen Spannmittel bereitstellt (vgl. Figur 3c). Ein solches Verbindungsteil 12a kann beispielsweise als starre Stange ausgebildet sein und ist mit einem Ende mit dem Führungsteil 12 verbunden, während es an dem anderen Ende zur Aufnahme eines Abschnitts des Führungsseils 13 ausgebildet ist.

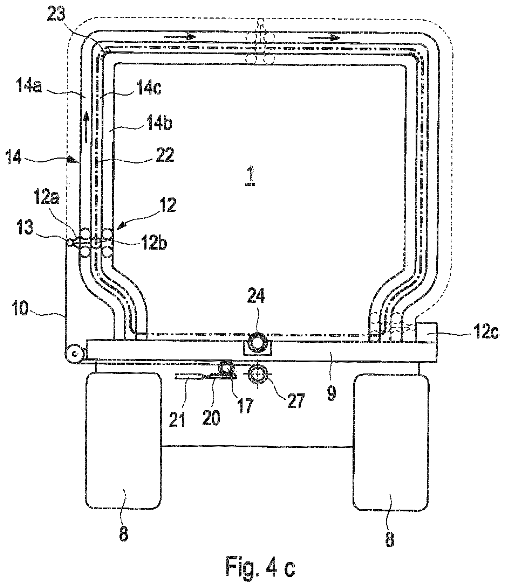

Bei der Ausführungsform der Figur 4b und der Ausführungsform der Figur 4c erkennt man, dass anstelle einer einzigen Führungsschiene wenigstens zwei oder sogar drei nebeneinander laufende Schienen 14a, 14b und 14c als Führungsschiene 14 vorgesehen sind. Die zusätzlichen Schienen 14b dienen dabei zur Führung einer oder mehrerer Kraftausgleichsrollen 12b (in Figur 4c zwei), die ein Verkippen des Verbindungsteils 12a und damit ein Durchhängen des Führungsseils verhindern soll bzw. sollen. Hierzu wird über diese eine zu einer Verkippbewegung gegenläufige Haltekraft in das damit verbundene Verbindungsteil 12a eingeleitet. Die Ausgestaltung als Rollen ist dabei insbesondere vorteilhaft, da diese reibungsarm in der Führungsschiene 14b geführt werden können, wenn das Führungsseil 13 verlagert werden soll. Dabei kann eine einzige Kraftausgleichsrolle 12b (Figur 4b) oder es können mehrere Kraftausgleichsrollen 12b (Figur 4c) vorgesehen sein. In gleicher Weise kann das Führungsteil 12 selbst als Rolle oder mit Rollen versehen sein, um einen reibungsarmen Lauf in der Führungsschiene 14a zu gewährleisten.

Wie in Figur 4c gezeigt kann die dritte Führungsschiene 14c zur Aufnahme und Führung eines Antriebsmittels, wie vorliegend einer Antriebskette 22 genutzt werden. Dabei können in den Umlenkbereichen, in denen die Führungsschiene 14a einen Radius aufweist alternativ oder zusätzlich zu dem vorgesehenen Radius Umlenkrollen 23 für die Antriebskette 22 vorgesehen sein. Die Antriebskette 22 kann, wie gezeigt, über wenigstens ein Antriebsrad 24 angetrieben werden. Die Umlenkrollen 23 und das wenigstens eine Antriebsrad 24 können zudem mit einer Außenverzahnung versehen sein, um einen definierten Eingriff in die Antriebskette 22 und eine verlustarme Kraftübertragung zu ermöglichen. Die Antriebskette 22 selbst ist wiederum mit dem Verbindungsteil 12a, dem Führungsteil 12 und/oder den Kraftausgleichsrollen 12b verbunden. Besonders vorteilhaft, um ein Verkanten der geführten Anordnung zu vermeiden, ist die in der Figur 4c gezeigte Anordnung, in der die Antriebskraft zwischen den rollenförmig ausgebildeten Führungsteilen 12 und den Kraftausgleichsrollen 12b eingeleitet wird.

Ein weiteres Detail der Ausführungsform der Figur 4b und 4c ist in der Kröpfung der Führungsschienenanordnung 14 im Übergangsbereich zu der Ladeplattform zu erkennen. Diese dient zur Sicherung der Führungsanordnung, insbesondere des Verbindungsteils 12a, das in seiner Ausgangsstellung (wenn die Ladung ungesichert ist) und in seiner Betriebsstellung (wenn die Ladung gesichert ist und das Führungsseil 13 oder die daran angebrachten Spannmittel 10 gesichert sind) nicht wesentlich über die seitlichen Abmessungen der Ladeplattform hinausragt und somit vor einem ungewollten Abreißen oder Verbiegen geschützt ist.

Die Fixierung des Führungsseils 13 und/oder der Spannmittel 10 kann auf unterschiedlichste Weise erfolgen, beispielsweise mechanisch mit einem Bolzen oder dergleichen (angedeutet durch die Fixiereinheit 12c) oder aber durch die Fördereinrichtung, die ihrerseits in der gewünschten Stellung gesichert werden kann, wie bereits vorstehend im Zusammenhang mit der Spanneinrichtung der Figur 5 beschrieben.

Es kann, wie vorstehend bereits angedeutet, ferner ausreichen, wenn die Führungsschiene 14 so weit von einer Längsseite des Transportwagens zur gegenüberliegenden Längsseite umläuft, dass die Ladung fixiert ist bzw. das Führungsseil von einer auf dem Boden stehenden Bedienperson erreicht werden kann.

Auch ist bei einer weiteren Ausführungsform gemäß der Figur 3d denkbar, dass an einer der Längsseiten eine starre Seitenwand 16 vorgesehen ist, die die Ladeplattform des Wagenrahmens 9 an einer ihrer Längsseiten begrenzt. Von dieser starren Seitenwand lassen sich die Spannmittel zumindest soweit umspannen, dass die Ladung fixiert ist bzw. das Führungsseil von einer auf dem Boden stehenden Bedienperson erreicht werden kann. Zum teilweise oder vollständigen Umspannen des geladenen Stückguts kann erfindungsgemäß sowohl eine Fördereinrichtung mit wenigstens einem Haltearm (vgl. Figuren 2a, 2b) als auch eine Fördereinrichtung mit wenigstens einem Halterahmen (vgl. Figuren 3a bis 3c) genutzt werden.

Die Fixierung der Spannmittel in der gewünschten Position kann bei jeder der vorstehend beschriebenen Ausführungsformen mithilfe der Fördereinrichtung selbst, die diese in der gewünschten Position hält, oder mittels einer zusätzlichen Fixiereinheit erreicht werden. Letztere kann insbesondere als mechanische Fixiereinheit 12c (vgl. Figur 4a, 4b) ausgebildet sein, die einen Bolzen, einen Haken oder dergleichen umfassen kann.

Selbstverständlich kann auch bei der ersten Variante der Figuren 2a, 2b anstelle einer Führungsstange ein Führungsseil verwendet werden. Gleichermaßen gilt umgekehrt, dass auch bei der zweiten Variante der Figuren 3a bis 3d das Vorsehen einer Führungsstange anstelle des Führungsseils sinnvoll sein kann.

Durch die vorliegende Erfindung kann vorteilhaft sichergestellt werden, dass ein einziger Anwender mehrere gurtförmige Spannmittel gleichzeitig um die auf der Ladeplattform geladenen Stückgüter spannen kann, um diese zu sichern. Hierdurch wird der aus dem Stand der Technik bekannte Nachteil eines hohen Arbeitsaufwandes zur Sicherung des Stückguts vermieden, während zugleich die Flexibilität der bekannten Spannmittel zum Sichern unterschiedlichster Ladung bereitgestellt ist.

## Patentansprüche

1. Transportwagen für Stückgut mit einer Ladeplattform, welche das Stückgut im Beladungszustand des Transportwagens zu untergreifen vermag, und mit einem Vergurtungssystem, das eine Sicherung des Stückguts auf der Ladeplattform ermöglicht und wenigstens einSpannmittel (10) umfasst, das mithilfe einer Fördereinrichtung zumindest abschnittsweise um das auf der Ladeplattform aufgeladene Stückgut herumgeführt werden kann, um das aufgeladene Stückgut gegen die Ladeplattform zu spannen,
**dadurch gekennzeichnet, dass** die Ladeplattform an ihren stirnseitigen Enden durch Querseitenteile begrenzt ist, die die Fördereinrichtung des Vergurtungssystems umfassen.

2. Transportwagen nach Anspruch 1,
wobei das wenigstens eine Spannmittel (10) des Vergurtungssystems entlang einer der Längsseiten der Ladeplattform angeordnet ist und mithilfe der Fördereinrichtung zumindest abschnittsweise in einer Richtung quer zur Längserstreckung des Transportwagens um das auf der Ladeplattform aufgeladene Stückgut herumgeführt werden kann,
und wobei vorzugsweise eine Umlenkeinrichtung zum Umlenken wenigstens eines Spannmittels (10) vorgesehen ist, das mittels der Umlenkeinrichtung zumindest abschnittsweise in einer Richtung im Wesentlichen parallel zur Längsachse der Ladeplattform geführt ist.

3. Transportwagen nach Anspruch 2,
wobei die Umlenkeinrichtung wenigstens ein Paar Umlenkrollen (10a, 10b) umfasst, die einem Spannmittel (10) zugeordnet sind und das Spannmittel (10) von einer Position zwischen den vorderen und hinteren Radachsen in eine Position über der vorderen oder hinteren Radachse umzulenken vermögen.

4. Transportwagen nach Anspruch 2 oder 3,
wobei das Vergurtungssystem eine Spanneinrichtung zum Spannen des wenigstens einen Spannmittels (10) umfasst.

5. Transportwagen nach Anspruch 4,
wobei die Spanneinrichtung eine um ihre Längsachse drehbare Spannwelle (17) umfasst, auf der das wenigstens eine Spannmittel (10) durch Drehung der Spannwelle (17) zumindest abschnittsweise auf- und abwickelbar ist, wobei die Spannwelle (17) vorzugsweise wenigstens eine schlitzförmige Öffnung (17a) aufweist, durch welche das wenigstens eine Spannmittel (10) sich hindurch zu erstrecken vermag.

6. Transportwagen nach Anspruch 4 oder 5,
wobei die Spanneinrichtung eine Hohlwelle sowie eine darin angeordnete Achse aufweist, auf der das wenigstens eine Spannmittel (10) durch Drehung der Achse relativ zu der Hohlwelle auf- und abwickelbar ist, wobei die Hohlwelle vorzugsweise wenigstens eine schlitzförmige Öffnung aufweist, durch welche ein freies Ende des wenigstens einen Spannmittels (10) nach außen zu ragen vermag.

7. Transportwagen nach einem der Ansprüche 4 bis 6,
wobei die Spanneinrichtung in einem Bereich, in dem das wenigstens eine Spannmittel auf eine Komponente der Spanneinrichtung auf- und abwickelbar ist, eine vergrößerte Haftreibung zwischen dieser Komponente der Spanneinrichtung und dem Spannmittel bereitstellt.

8. Transportwagen nach einem der Ansprüche 4 bis 7,
wobei die Spanneinrichtung eine Antriebseinheit (28) zum drehenden Antrieb sowie eine Überlastsicherung umfasst.

9. Transportwagen nach einem der vorhergehenden Ansprüche,
wobei die Fördereinrichtung wenigstens ein Führungsseil (13) und/oder eine Führungsstange (3) umfasst, mit dem oder mit der das wenigstens eine Spannmittel (10) in der Weise verbindbar ist, dass es mittels des Führungsseils (13) und/oder der Führungsstange (3) zumindest abschnittsweise um das auf der Ladeplattform aufgeladene Stückgut herumgeführt werden kann.

10. Transportwagen nach Anspruch 9,
wobei die Führungsstange die Spanneinrichtung zum Spannen des wenigstens einen Spanmittels umfasst.

11. Transportwagen nach einem der vorhergehenden Ansprüche
wobei die Fördereinrichtung wenigstens einen, bevorzugt zwei Haltearme (5) zum Führen und Halten des Führungsseils (13) oder der Führungsstange (3) umfasst, wobei der wenigstens eine Haltearm (5) an einem der Querseitenteile (1) angeordnet ist.

12. Transportwagen nach Anspruch 11,
wobei dem wenigstens einen Haltearm (5) eine Antriebseinrichtung (6, 7) zugeordnet ist, mittels derer der wenigstens eine Haltearm (5) zum Führen und Halten des Führungsseils (13) oder der Führungsstange (3) relativ zu der Ladeplattform verlagerbar ist.

13. Transportwagen nach einem der Ansprüche 1 bis 10,
wobei die Fördereinrichtung wenigstens einen, bevorzugt zwei Halterahmen (15) zum Führen und Halten des Führungsseils (13) oder der Führungsstange (3) umfasst, wobei der wenigstens eine Halterahmen an einem der Querseitenteile (1) angeordnet ist.

14. Transportwagen nach Anspruch 12,
wobei der wenigstens eine Halterahmen (15) wenigstens eine Führungsschiene (14) umfasst, in der ein Abschnitt des Führungsseils (13) oder der Führungsstange (3) direkt oder indirekt geführt aufgenommen werden kann.

15. Transportwagen nach Anspruch 13 oder 14,
wobei dem wenigstens einen Halterahmen (15) eine Antriebseinrichtung (22, 24) zugeordnet ist, mittels derer der Abschnitt des Führungsseils (13) oder der Führungsstange (3), welcher in der Führungsschiene (14) aufgenommen ist, relativ zu der Ladeplattform verlagerbar ist.

## Claims

1. A transport carriage for cargo having a loading platform which is able to reach under the cargo in the loaded state of the transport carriage, and a strapping system which permits a securing of the cargo on the loading platform and comprises at least one tensioning means (10) which may be guided at least in sections around the cargo loaded onto the platform by means of a common conveying device in order to tension the loaded cargo against the loading platform,
**characterized in that** the loading platform at its front ends is defined by transverse side parts which comprise the conveying device of the strapping system.

2. The transport carriage as claimed in claim 1, wherein the at least one tensioning means (10) of the strapping system is arranged along one of the longitudinal sides of the loading platform and may be guided at least in sections in a direction transversely to the longitudinal extent of the transport carriage around the cargo loaded on the loading platform by means of the conveying device, and wherein preferably a deflection device is provided for deflecting at least one tensioning means (10) which by means of the deflection device is guided at least in sections in a direction substantially parallel to the longitudinal axis of the loading platform.

3. The transport carriage as claimed in claim 2, wherein the deflection device comprises at least one pair of pulleys (10a, 10b) which are assigned to a tensioning means (10) and which may deflect the tensioning means (10) from a position between the front and rear wheel axles into a position above the front or rear wheel axle.

4. The transport carriage as claimed in claim 2 or 3, wherein the strapping system comprises a tensioning device for tensioning the at least one tensioning means (10).

5. The transport carriage as claimed in claim 4, wherein the tensioning device comprises a tensioning shaft (17) which is rotatable about its longitudinal axis, on which the at least one tensioning means (10) is able to be wound on and off at least in sections by rotating the tensioning shaft (17), wherein the tensioning shaft (17) preferably has at least one slot-shaped opening (17a), the at least one tensioning means (10) being able to extend therethrough.

6. The transport carriage as claimed in claim 4 or 5, wherein the tensioning device comprises a hollow shaft and an axle arranged therein, the at least one tensioning means (10) being able to be wound on and off said axle by rotating the axle relative to the hollow shaft, wherein the hollow shaft preferably has at least one slot-shaped opening, a free end of the at least one tensioning means (10) being able to protrude to the outside through said slot-shaped opening.

7. The transport carriage as claimed in one of claims 4 to 6, wherein in a region in which the at least one tensioning means is able to be wound onto and off a component of the tensioning device, the tensioning device provides a greater degree of static friction between this component of the tensioning device and the tensioning means.

8. The transport carriage as claimed in one of claims 4 to 7, wherein the tensioning device comprises a drive unit (28) for the rotating drive and an overload protection.

9. The transport carriage as claimed in one of the preceding claims, wherein the conveying device comprises at least one guide rope (13) and/or guide bar (3), the at least one tensioning means (10) being able to be connected thereto such that it may be guided by means of the guide rope (13) and/or the guide bar (3) at least in sections around the cargo loaded onto the loading platform.

10. The transport carriage as claimed in claim 9, wherein the guide bar comprises the tensioning device for tensioning the at least one tensioning means.

11. The transport carriage as claimed in one of the preceding claims, wherein the conveying device comprises at least one, preferably two, retaining arms (5) for guiding and retaining the guide rope (13) or the guide bar (3), wherein the at least one retaining arm (5) is arranged on one of the transverse side parts (1).

12. The transport carriage as claimed in claim 11, wherein a drive device (6, 7) is assigned to the at least one retaining arm (5), the at least one retaining arm (5) being able to be displaced thereby for guiding and retaining the guide rope (13) or the guide bar (3) relative to the loading platform.

13. The transport carriage as claimed in one of claims 1 to 10, wherein the conveying device comprises at least one, preferably two, retaining frames (15) for guiding and retaining the guide rope (13) or the guide bar (3), wherein the at least one retaining frame is arranged on one of the transverse side parts (1).

14. The transport carriage as claimed in claim 12, wherein the at least one retaining frame (15) comprises at least one guide rail (14), a portion of the guide rope (13) or the guide bar (3) being able to be directly or indirectly received therein so as to be guided.

15. The transport carriage as claimed in claim 13 or 14, wherein a drive device (22, 24) is assigned to the at least one retaining frame (15), the portion of the guide rope (13) or the guide bar (3) which is received in the guide rail (14) being able to be displaced thereby relative to the loading platform.

## Revendications

1. Chariot de transport d'articles avec un plateau de chargement capable de supporter les articles lorsque le chariot de transport est dans l'état chargé, et avec un système de sanglage permettant un arrimage des articles sur le plateau de chargement et comprenant au moins un moyen de serrage (10) pouvant être disposé au moins par sections, au moyen d'un convoyeur, autour des articles chargés sur le plateau de chargement pour serrer les articles chargés contre le plateau de chargement,
**caractérisé en ce que** le plateau de chargement est délimité à ses extrémités frontales par des éléments latéraux transversaux comprenant le convoyeur du système de sanglage.

2. Chariot de transport selon la revendication 1,
dans lequel l'au moins un moyen de serrage (10) du système de sanglage est disposé le long de l'un des côtés longitudinaux du plateau de chargement et peut être disposé au moins par sections, au moyen du convoyeur, autour des articles chargés sur le plateau de chargement dans une direction perpendiculaire à l'extension longitudinale du chariot de transport,
et dans lequel de préférence un dispositif de renvoi pour le renvoi d'au moins un moyen de serrage (10) est prévu, guidé au moins par sections par le dispositif de renvoi dans une direction sensiblement parallèle à l'axe longitudinal du plateau de chargement.

3. Chariot de transport selon la revendication 2,
dans lequel le dispositif de renvoi comprend au moins une paire de galets de renvoi {10a, 10b) affectés à un moyen de serrage (10) et capables de dévier le moyen de serrage (10) d'une position entre les essieux avant et arrière dans une position au-dessus de l'essieu avant ou arrière.

4. Chariot de transport selon la revendication 2 ou 3,
dans lequel le système de sanglage comprend un dispositif de serrage pour serrer l'au moins un moyen de serrage (10).

5. Chariot de transport selon la revendication 4,
dans lequel le dispositif de serrage comprend un arbre de serrage (17) tournant autour de son axe longitudinal, sur lequel l'au moins un moyen de serrage (10) peut être enroulé et déroulé au moins par sections par la rotation de l'arbre de serrage (17), l'arbre de serrage (17) comprenant de préférence au moins une ouverture (17a) en forme de fente à travers laquelle l'au moins un moyen de serrage (10) peut s'étendre.

6. Chariot de transport selon la revendication 4 ou 5,
dans lequel le dispositif de serrage comprend un arbre creux et un axe disposé dans celui-ci, sur lequel l'au moins un moyen de serrage (10) peut être enroulé et déroulé par la rotation de l'axe par rapport à l'arbre creux, l'arbre creux comprenant de préférence au moins une ouverture en forme de fente à travers laquelle une extrémité libre de l'au moins un moyen de serrage (10) peut dépasser vers l'extérieur.

7. Chariot de transport selon l'une des revendications 4 à 6,
dans lequel le dispositif de serrage assure, dans une zone dans laquelle l'au moins un moyen de serrage peut être enroulé et déroulé sur un élément du dispositif de serrage, un frottement par adhérence augmenté entre cet élément du dispositif de serrage et le moyen de serrage.

8. Chariot de transport selon l'une des revendications 4 à 7,
dans lequel le dispositif de serrage comprend une unité d'entraînement (28) pour l'entraînement en rotation, ainsi qu'une protection contre les surcharges.

9. Chariot de transport selon l'une des revendications précédentes,
dans lequel le convoyeur comprend au moins une corde de guidage (13) et/ou une barre de guidage (3), à laquelle l'au moins un moyen de serrage (10) peut être relié de sorte qu'il puisse être disposé au moins par sections, au moyen de la corde de guidage (13) et/ou de la barre de guidage (3), autour des articles chargés sur le plateau de chargement.

10. Chariot de transport selon la revendication 9,
dans lequel la barre de guidage comprend le dispositif de serrage pour le serrage de l'au moins un moyen de serrage.

11. Chariot de transport selon l'une des revendications précédentes,
dans lequel le convoyeur comprend au moins un, de préférence deux bras de support (5) pour le guidage et le maintien de la corde de guidage (13) ou de la barre de guidage (3), dans lequel l'au moins un bras de support (5) est disposé sur l'un des éléments latéraux transversaux (1).

12. Chariot de transport selon la revendication 11,
dans lequel un dispositif d'entrainement (6, 7) est affecté à l'au moins un bras de support (5), permettant de déplacer l'au moins un bras de support (5) pour guider et maintenir la corde de guidage (13) ou la barre de guidage (3) par rapport au plateau de chargement.

13. Chariot de transport selon l'une des revendications 1 à 10,
dans lequel le convoyeur comprend au moins un, de préférence deux cadres de support (15) pour le guidage et le maintien de la corde de guidage (13) ou de la barre de guidage (3), dans lequel l'au moins un cadre de support est disposé sur l'un des éléments latéraux transversaux (1).

14. Chariot de transport selon la revendication 12,
dans lequel l'au moins un cadre de support (15) comprend au moins un rail de guidage (14) dans lequel une partie de la corde de guidage (13) ou de la barre de guidage (3) peut être logée et guidée de manière directe ou indirecte.

15. Chariot de transport selon la revendication 13 ou 14,
dans lequel un dispositif d'entrainement (22, 24) est affecté à l'au moins un cadre de support (15), permettant de déplacer la partie de la corde de guidage (13) ou de barre de guidage (3) logée dans le rail de guidage (14) par rapport au plateau de chargement.
